# EUROPEAN PATENT APPLICATION

(11) **EP 3 176 674 A1**
(43) Date of publication of application: **07.06.2017**
(21) Application number: 15197787.3
(22) Date of filing: 03.12.2015
(51) Int. Cl.: G06F 1/32

(54) **METHOD FOR POWER CONTROL OF A CONTROL UNIT AND CONTROL UNIT**

(71) Applicant: OpenSynergy GmbH, 10245 Berlin (DE)
(72) Inventor: SONCK-THIEBAUT, Stefaan, 10825 Berlin (DE); HUSS, Sebastian, 15745 Wildau (DE)
(74) Representative: Lavoix

(57) **Abstract**

The present invention relates to control unit (1) comprising: at least one processor (3) having an activated mode and a deactivated mode, at least one memory (5) connected to the at least one processor, and one or more wake-up sources (13, 17, 19, 26), wherein each wake-up source is connected to a microcontroller (9) to provide a wake-up signal to the microcontroller, the microcontroller (9) being connected to the at least one processor (3), wherein the microcontroller (9) is adapted to switch the at least one processor into the activated mode upon reception of at least one wake-up signal from a wake-up source monitored by the microcontroller, characterized in that the control unit (1) further comprises: a virtualization layer (40) adapted to run on the at least one processor, a first partition (32) provided by the virtualization layer, a power management module (44) running in first partition, at least one second partition (34, 36, 38) provided by the virtualization layer, wherein in each second partition at least one application module (46) is adapted to run, wherein the power management module (44) is adapted to configure the microcontroller (9) in dependence of at least one state of the at least one application module (46).

## Description

The present invention concerns a control unit comprising at least one processor having an activated mode and a deactivated mode, at least one memory connected to the at least one processor, and one or more wake-up sources, wherein each wake-up source is connected to a microcontroller to provide a wake-up signal to the microcontroller, the microcontroller being connected to the at least one processor, wherein the microcontroller is adapted to switch the at least one processor into the activated mode upon reception of at least one wake-up signal from a wake-up source monitored by the microcontroller.

Further, the present invention relates to a method for power control of a control unit, the control unit comprising a at least one processor having an activated mode and a deactivated mode, at least one memory connected to the at least one processor, and one or more wake-up sources, wherein each wake-up source is connected to a microcontroller to provide a wake-up signal to the microcontroller, the microcontroller being connected to the at least one processor, wherein the microcontroller is adapted switch the at least one processor into the activated state upon reception of at least one wake-up signal from a wake-up source monitored by the microcontroller.

Control units may comprise multiple processors, a first processor on which applications are running on an operating system and a second one, which monitors a wake-up source. When the first processor is in a power saving mode, the second processor may wake up the first processor after reception of a wake-up signal.

However, in case that the first processor uses a hypervisor with multiple operating systems, the first processor cannot use its built in power saving modes because of the used hypervisor. Further, even if the first processor would be able to use its built in power saving modes or a low power standby mode, typically the first processor is using too much power. Every operating system running on the hypervisor needs to be woken up upon another event.

Automotive electronic control units (ECU) have very strict power budgeting requirements, due to the limited capacity of a common vehicle battery. Telematic ECUs often need to stay in standby mode all the time to fulfill their services. For example they should stay in connection to a mobile network to be able to receive SMS messages (short message service messages) or calls or should connect to the mobile network regularly to check for SMS messages.

Object of the invention is to provide a control unit and a method, wherein one processor includes a system with a virtualization layer and a plurality of partitions, with an improved power saving mode.

In light of the above, a control unit is provided comprising: at least one processor having an activated mode and a deactivated mode, at least one memory connected to the at least one processor, and one or more wake-up sources, wherein each wake-up source is connected to a microcontroller to provide a wake-up signal to the microcontroller, the microcontroller being connected to the at least one processor, wherein the microcontroller is adapted to switch the at least one processor into the activated mode upon reception of at least one wake-up signal from a wake-up source monitored by the microcontroller, wherein the control unit further includes: a virtualization layer adapted to run on the at least one processor, a first partition provided by the virtualization layer, a power management module running in first partition, at least one second partition provided by the virtualization layer, wherein in each second partition at least one application module is adapted to run, wherein the power management module is adapted to configure the microcontroller in dependence of at least one state of the at least one application module.

According to particular embodiments, the system may have the following features, which may be combined in any technical feasible combination:
- the microcontroller is adapted to switch the at least one processor into the deactivated mode after reception of a respective command from the power management module;
- the power management module is adapted to determine a point in time to switch the at least one processor into the deactivated mode in dependence of at least one state of the at least one application module;
- Control unit comprises one or more converters for powering the at least one processor, wherein at least one converter has an activated mode and a deactivated mode, wherein the microcontroller is adapted to switch the at least one converter into the deactivated mode after reception of a respective command from the power management module and/or, wherein the microcontroller is adapted to switch the at least one converter into the activated mode upon reception of at least one wake-up signal from a wake-up source monitored by the microcontroller;
- the configuration of the microcontroller determines the one or more wake-up sources to be monitored by the microcontroller;
- the power management module is adapted to provide for each application module a respective state machine representing the actual state of each application module;
- the wake-up signal is a clock signal, a signal on a pin, a signal via a network connection, a signal received from a modem, a signal received from a hardware interface of a bus and/or a signal via a bus;
- the power consumption of the microcontroller, when in an activated state, is less than the power consumption of the at least one processor, when in the activated state, wherein, in particular the power consumption of the microcontroller, when in an activated state, is at least 10 times less than the power consumption of the at least one processor, when in the activated state; and/or
- the virtualization layer enables the first partition, in particular the power management module, exclusive access to the microcontroller.

According to another aspect, a method is provided for power control of a control unit, the control unit comprising a at least one processor having an activated mode and a deactivated mode, at least one memory connected to the at least one processor, and one or more wake-up sources, wherein each wake-up source is connected to a microcontroller to provide a wake-up signal to the microcontroller, the microcontroller being connected to the at least one processor, wherein the microcontroller is adapted switch the at least one processor into the activated state upon reception of at least one wake-up signal from a wake-up source monitored by the microcontroller, the method comprising: running a virtualization layer on the at least one processor, providing a first partition on the virtualization layer, wherein the first partition includes a power management module, providing at least one second partition on the virtualization layer, wherein each second partition includes at least one application module, sending, by the power management module, a wake-up configuration to the microcontroller in dependence of at least one state of the at least one application module.

According to particular embodiments, the method may have the following features, which may be combined in any technical feasible combination:
- the method further comprises determining a point in time to switch the at least one processor into the deactivated state in dependence of at least one state of the at least one application module; sending a command to the microcontroller in dependence of the determined point in time to switch the at least one processor into the deactivated state and/or sending a command including the determined point in time;
- the configuration of the microcontroller determines the one or more wake-up sources to be monitored by the microcontroller; and/or
- the method further comprises running, in particular by the power management module, for each application module a respective state machine representing the actual state of each application module.

In embodiments, the methods implements different method steps of embodiments disclosed herein, in particular of a system according to embodiments disclosed herein.

According to a further aspect, a computer program product is provided comprising commands for executing the method according an embodiment disclosed herein, when loaded and executed on a processor. According to an embodiment a computer program product may be a physical software product, for example a hard disc, a solid state disc, a CD-ROM, a DVD, comprising the program.

According to other aspects, the present invention relates to a non-volatile memory, for example a hard disc, a solid state disc, a CD-ROM, a DVD, including a program containing commands for executing the method according an embodiment disclosed herein, when loaded and executed on a processor.

According to the invention, the control unit achieves very low standby power consumption.

Further advantages, features, aspects and details are evident from the dependent claims, the description and the drawings.

So that the manner in which the above recited features of the present invention can be understood in detail, a more particular description of the invention, briefly summarized above, may be read by reference to embodiments. The accompanying drawings relate to embodiments of the invention and are described in the following:
Fig. 1 shows schematically the hardware of an electronic control unit (ECU);
Fig. 2 shows schematically a system according to an embodiment of the invention; and
Fig. 3 shows schematically a flow chart of a method according to an embodiment disclosed herein.

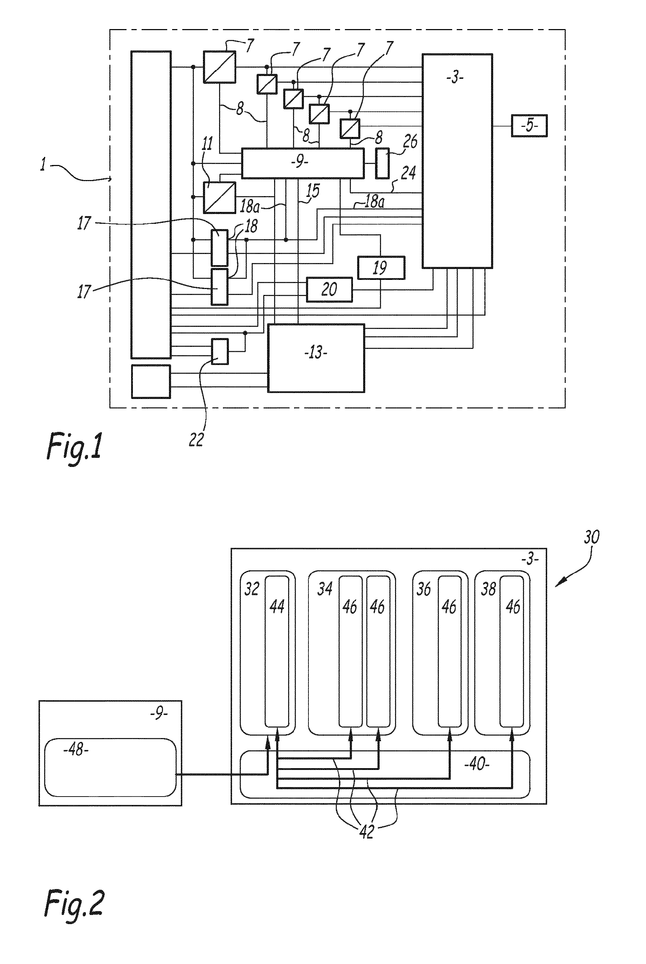

Figure 1 shows schematically an electronic control unit (ECU) 1, in particular for an automotive vehicle. According to an embodiment, the ECU 1 is provided as an embedded system in the vehicle.

The ECU 1 is also called control unit in the present patent application. For example, the ECU 1 is realized as a system on chip (SoC). According to an embodiment, an ECU comprises one or more processors 3 connected to one or more memories 5. The one or more processors 3 are adapted to run complex applications, which will be explained in more detail below. The at least one processor 3 may have an activated mode, where the hypervisor and a plurality of applications are running. Further, the at least one processor 3 may have a deactivated mode, when the at least one processor is shut-down. On wake up from the deactivated mode, the at least one processor 3 must boot the one or more systems running on the at least one processor 3. In the deactivated mode the applications are not running. In an embodiment, the deactivated mode of the at least one processor 3 may also be a stand-by mode. When entering the stand-by mode, the volatile memory is kept (standby-) powered, so that, when waking up from the stand-by mode, the at least one processor can immediately continue the operations, which were active before entering the stand-by mode.

The ECU comprises one or more first converters 7, in particular DC/DC converters for powering the one or more processors 3. For example, in case of a plurality of first converters 7, each of the one or more first converters is adapted to provide a different voltage to the one or more processors 3, for example respectively one of 1,2V, 1,5V, 2,5V, 3,3V and 5V. The one or more first converters 7 are powered (directly or indirectly) by an external power supply, for example a battery of the automotive vehicle. For example, the external power supply may provide a 12V voltage power supply. In the embodiment shown in Figure 1, five first converters 7 are shown. One of the first converters 7 is powered by the external power supply and powers the other first converters 7. In an embodiment, the at least one processor 3 uses multiple first converters 7 and needs a dedicated starting sequence of the different converters 7 and thus power supplies.

Further, the ECU 1 includes a microcontroller 9. The microcontroller 9 may have a activated mode and a stand-by mode. The microcontroller 9 is adapted to wake-up the one or more processors 3 and/or to control the power supply to the one or more processor 3. For example, the power supply to the at least one processor 3 is controlled by controlling at least one, in particular all, of the first converters 7 via a control connection 8. In an embodiment, the microcontroller 9 is adapted to turn on and off one or more of the first converters 7. In other words, the microcontroller 9 is adapted to control the whole power supply system for the at least one processor 3. In an embodiment, the microcontroller 9 may control a starting sequence and timing of activating or turning on the plurality of first converters 7 and accordingly the stopping sequence and timing of deactivating or turning off of the plurality of first converters 7.

Further, the microcontroller 9 is adapted to monitor one or more, in particular a plurality, of (distinct) wake-up sources. The wake-up sources may generate a wake-up signal, which is provided to the microcontroller 9. The wake up signal may include additional information for the microcontroller 9. In an embodiment, the microcontroller 9 is configured to monitor one or more specific wake-up sources. Upon reception of a wake-up signal of a wake-up source to be monitored according to the configuration, the microcontroller is adapted to switch itself from the stand-by mode to the activated mode, to wake-up the at least one processor 3 (i.e. to switch the at least one processor to the activated mode) and/or to active the one or more first converters 7.

The ECU 1 comprises further a second converter 11. The second converter 11 is connected to the external power supply, for example the battery of the automotive vehicle. In an embodiment, second converter 11 may also power a modem 13.

In an embodiment, which may be combined with other embodiment, the modem 13 is a wake-up source and may provide a wake-up signal to the microcontroller 9. For example a control connection 15 may be used for that purpose. The modem 13 may be a wireless modem, for example a GSM, 3G, UMTS, and/or LTE modem for connecting to a wireless network. In an embodiment, the wake-up signal may be a modem ring indicator. In an embodiment, for example upon reception of an SMS message, the modem 13 may generate a wake up signal and send it to the microcontroller 9. According to an embodiment, the modem 13 may be adapted to be connected to a remote server and/or to receive commands from the remote server. Upon reception of a command or a message from the remote server, the modem 13 may be adapted to generated a wake-up message or the wake-up signal.

Further, the modem 13 is connected to the at least one processor 3 to provide or receive data from the at least one processor 3.

In a further embodiment, the ECU 1 may comprise at least one hardware interface 17 for connecting the ECU 1 to peripheral devices. For example, the hardware interface is a hardware controller 17 or transceiver for a bus. The ECU 1 shows two hardware controllers 17 for a bus. However, the ECU 1 may comprise less or more hardware controllers 17 for a bus.

For example, the bus may be controller area network (CAN) bus, Ethernet connection and/or FlexRay busses and the like. CAN and FlexRay bus systems are dedicated for use in automotive vehicles. For automotive field busses the CAN (Controller area network) protocol is widely used. The CAN Protocol specifies the transport of CAN messages over a CAN bus. The CAN is standardized according to ISO 11898.

The hardware controller 17 for the bus is connected to the at least one processor 3 for transmitting and receiving messages to be transmitted via the bus. Further, each hardware controller 17 is provided with a control port 18, which is connected to the microcontroller 9 and to the at least one processor 3 via a control connection 18a.

According to an embodiment, the hardware controller 17 is a wake-up source. For example, the hardware controller 17 may generate a wake-up signal to be provided to the microcontroller 9, in particular via the control connection 18a. In an embodiment, upon reception of a wake-up signal, in particular a CAN-wake-up signal, by the hardware controller 17, the hardware controller 17 is adapted to provide to the microcontroller 9 a respective wake-up signal.

Further, the ECU 1 includes a button hardware controller 19. The button hardware controller 19 is adapted to receive input signals from one or more buttons, to analyse the received input signals and to provide a wake-up signal to the microcontroller 9. Thus, also the buttons and/or the button hardware controller 19 may be a wake-up source for the microcontroller 9.

In an embodiment, the ECU includes a codec 20 and an amplifier 22 for audio signals coming from the at least one processor 3 and or received from a microphone.

In an embodiment, the microcontroller 9 is connected to a timer or clock 26. In another embodiment, the timer or clock 26 may be provided within the microcontroller 9. The timer or clock 26 may also provide a wake-up signal, for example a specific time, or a run-out time, to the microcontroller 9. Thus, the timer or clock 26 may also be a wake-up source for the microcontroller 9.

In an embodiment, the controller 9 may be configured, to check upon reception of a wake-up signal from the timer or clock, whether a new message will be received by the modem 13. In other embodiments, the controller 9 is adapted to generate a first message to be sent via the modem 13. Upon reception or not reception of a second message or command by the modem from the remote server the modem may generate a wake-up message or wake-up signal and/or forward the second message to the microcontroller 9, and the microcontroller 9 may be configured to wake-up the at least one processor 3 upon reception of the second message. In some embodiments, the microcontroller 9 may decide whether or not to wake up the at least one processor 3 based on the content of a received message and/or wake-up signal.

It should be noted that in Figure 1 only a limited number of wake-up sources are shown. The microcontroller 9 may even be connected to more or less wake-up sources which provide wake-up signals to the microcontroller 9.

The microcontroller 9 is further connected the at least one processor 3 by a bidirectional communication connection 24. Thus, the at least one processor 3 is adapted to configure and trigger the microcontroller 9, in particular by a power control application running on the microcontroller 9. Further, the microcontroller is adapted to wake-up the one or more processors 3 via the connection 24.

Figure 2 shows the software architecture of an ECU 1 according to an embodiment of the invention. A system 30 is implemented on the at least one processor 3. The system 30 comprises a plurality of partitions 32, 34, 36 and 38. For example guest systems or guest operating systems are able to run in each partition 32, 34, 36 and 38. The partitions 32, 34, 36 and 38 are running via a virtualization layer 40, for example a microkernel or a hypervisor, on the at least one processor 3 of the ECU 1. In other words, the virtualization layer 40 enables several partitions and/or guest systems 32, 34, 36 and 38 to run on the processor 3. The virtualization layer 40 is adapted to assign processor time and memory space to each of the plurality of partitions 32, 34, 36 and 38. In an embodiment, the virtualization layer 40 may support several instances of the Linux operating system.

The partitions are separated and isolated by the virtualization layer 40.

One example of a virtualization layer 40 is a hypervisor between the hardware, for example a system on chip (SoC), and partitions 32, 34, 36 and 38. The hypervisor runs directly on the hardware, in particular the at least one processor 3, to control the hardware and manages the partitions and the communication between the partitions 32, 34, 36 and 38. The hypervisor provides and defines a simulated hardware for the installed guest systems. Further, the hypervisor assigns the hardware resources to the respective guest systems and/or partitions and mechanisms for communication between different guest systems and/or partitions (inter-partition-communication (IPC)).

Another example of a virtualization layer 40 is a microkernel operating system, which is used as a virtualization layer between the hardware and partitions 32, 34, 36 and 38. The microkernel runs directly on the hardware or the at least one processor 3. A microkernel is a minimal operating system construct, which makes mechanisms available in order to implement operating system services. This comprises substantially: the management of the address range or space, the provision and management of mechanisms for separating program sections and their thread management and scheduling, and mechanisms for communication between different guest systems and/or partitions (inter-partition-communication (IPC)).

As already discussed here-above, the virtualization layer 40 is adapted to assign the hardware resources to the respective partitions 32, 34, 36 and 38 and to provide inter partition communication (IPC) links 42 between the different partitions 32, 34, 36 and 38. Further, the virtualization layer 40 is adapted to provide or restrict address ranges of the hardware, for example the one or more hardware interfaces 7, to specific partitions 32, 34, 36 and 38.

In an embodiment, the virtualization layer 40 may enable direct and/or exclusive access for a specific partition, here the first partition 32, to access the microcontroller 9 by enabling only the first partition 9 to access the hardware address range or the hardware register set for communication with microcontroller 9, in particular without translation of the hardware address range by the virtualization layer 40.

The partitions 32, 34, 36 and 38 include a first partition 32, which includes a power management module 44, and a plurality of second partitions 34, 36 and 38, which include one or more application modules 46 to be monitored by the power management module 44. An application module may be a software component of an application running on an operating system, a module of an operating system or any other module running in the respective partition 34, 36 and 38 relevant for the power management of the at least one processor 3. In other words, each of the application modules 46 can have demands on the power management of the ECU 1.

Each of the second partitions 34, 36 and 38 may run an operating system like Linux.

The virtualization layer 40 may guarantee a specific runtime to the first partition 32. The power management module 44 is adapted to control and configure the microcontroller 9, in particular the power control application 48 running on the microcontroller 9. In an embodiment, the power management module 44 does not run on a complex operating system. The power management module 44 may run on or may be run directly by a scheduler and/or task manager provided by the virtualization layer.

The power management module 44 runs on a separate partition compared to the one or more application modules 46 to be monitored. In an embodiment, the power management module 44 is adapted to determine the point in time to shut down the at least one processor 3 based on the actual status of the application module 46. For example, the point in time to shut down the at least one processor 3 may depend on the shut-down of at least one operating system running in at least one of the second partitions 34, 36 and 38. In some embodiments, the point in time may depend on sending of a specific message to a particular destination, for example to inform that the ECU will be shut-down.

In an embodiment, the power management module 44 is adapted to configure the microcontroller 9 based on the actual status or on the demand of one or more application modules 46. For example, one application module 46 requires that the at least one processor is woken up upon reception of a specific wake-up signal, for example a time out, a time, a button press, a message on a communication bus, an message via a wireless network, and/or the like. Then, the power management module 44 is adapted to configure the microcontroller 9, in particular the one or more wake-up sources to monitor and/or the actions to take after reception of specific wake-up signals. For example, the microcontroller 9, may monitor, in particular in its stand-by mode, one wake-up source or a plurality of wake-up sources 13, 17, 19, 26, for example a time out, or the microcontroller may monitor several wake-up sources at the same time. For example an action to take after reception of a specific wake-up signal is to wake up the at least processor 3, where one or more application modules 46 evaluate the wake-up reason and contact a remote server or send a message to a remote server.

According to an example, the power management module 44 is provided with a respective finite state machine for each of the application modules 46 relevant for the decision process for the power management module 44.

If the actual settings are determined, the power management module 44 is adapted to provide the settings to the microcontroller 9 so that the microcontroller 9 is configured with the new settings.

In an embodiment, the power management module 44 is adapted to command the microcontroller 9, so that the microcontroller 9 activates a power saving mode of the at least one processor 3 and/or the ECU 1. The activation of the power saving mode may include the switching of the at least one processor 3 into the deactivated mode, the deactivation of the first converters 7 and/or the activation of the stand-by mode of the microcontroller 9. For example, the activation of the deactivated mode may also include the activation of the stand-by mode of the at least one processor 3. In other words, the microcontroller 9 is adapted to executes the steps necessary to wake up or shut down the power control of the at least one processor 3. The ECU 1 has a second mode, an activated mode, when the at least one first processor 3 is in the activated mode, in particular the one or more converters 7 are activated.

Further, the power management module 44 may run a complex power management logic, for example for determining the states of the application modules 46 running on different partitions 34, 36, 38, as it runs on the at least one (powerful) processor 3.

According to an embodiment, the power management module 44 is informed via IPC links 42 about the actual state of the application modules 46.

As written above, the first partition 32, and thus the power management module 40, may have exclusive access to the microcontroller 9. Thus, communication of other software components, for example the application modules 46, with the microcontroller 9 is inhibited, thanks to the hardware access configuration of the virtualization layer 40 allowing only the first partition 32 to use the relevant hardware interfaces of the at least one processor 3.

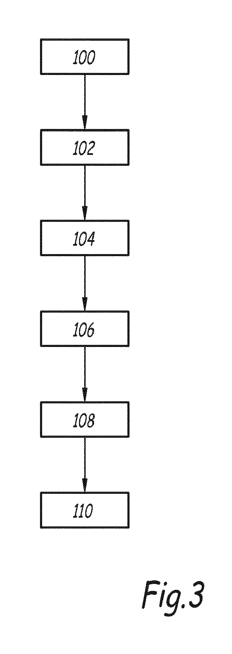

Figure 3 shows a flow chart of a method. In a first step 100 the ECU 1 is running. In other words, the microcontroller 9 is in the activated state and the at least one processor 3 is running. Further, in the second partitions 34, 36, 38 the application modules 46 are running. In the first partition 32, the power management module is also running and receives via the IPC link 42 information about the actual states of the application modules 46. Then, after reception of information about a respective application module 46, the power management module updates the state machine.

In step 102, the power management module 44 determines the one or more, in particular a plurality, wake-up sources 13, 17, 19, 26 to be monitored by the microprocessor. For example, an application module 46 may provide information about a specific wake-up source to be monitored to the power management module 44. In another embodiment, which may be combined with other embodiments disclosed herein, the power management module 44 may determine the wake-up sources 13, 17, 19, 26 based on the actual state of the state machines for each application module.

In step 104, the power management module 44 provides the information of the wake-up sources 13, 17, 19, 26 to be monitored to the microcontroller 9, in particular the power control application 48 running on the microcontroller 9, via the connection 24. In other words, the power management module may configure the microcontroller 9 to monitor specific wake-up sources and/or to perform specific actions after reception of a specific wake-up signal. In an embodiment, power control application 48 upon reception of the configuration data performs the configuration of the microcontroller 9. In other embodiments, the power management module 44 may directly configure the microcontroller 9 for specific wake-up sources 13, 17, 19, 26.

In step 106, the power management module 44 receives a signal to shut down the ECU 1 and/or the at least one processor 3. In other words, the power management module receives a signal to switch the ECU 1 into a power saving mode. For example, an application module 46 may send a command to shut down the at least one processor 3 or to switch the at least one processor 3 to the deactivated mode. A different application module 46 may send a contrasting request to keep the at least one processor 3 active. An embodiment of the power management module 44 contains a logic to handle these conflicts. In other embodiments, the power management module 44 may receive directly an external signal to shut down the ECU and/or to deactivate the at least one processor 3. The power management module may determine the best point in time to shut-down the ECU 1 and/or the at least one processor. For example, the point in time may depend on the actual or future status of a specific application module 46. In another example, the point in time may depend whether an operating system in one of the second partitions 34, 36, 38 is shut down.

The determined point in time is provided to the microcontroller 9. In another embodiment, at the determined point in time, the power management module 44 sends a signal or a message to the microcontroller 9 that the ECU 1 and/or the at least one processor 3 should shut-down.

In step 108, the microcontroller 9 starts the shut-down process at the determined point in time. For example, the microcontroller, forces the at least one processor 3 to shut-down or to switch the at least one processor 3 to the deactivated mode, if it has not done already before, or to switch it into in the stand-by mode. In an embodiment, the microcontroller 9 then deactivates the one or more first converters 7, which power the at least one processor 3. For example the deactivation of the one or more first converters 7 may take place in a specific sequence and/or time line to not harm the at least one processor 3. According to an example, the microcontroller 9 then also is switched to a stand-by state. Even during the stand-by state, the microcontroller 9 may be woken up upon reception of wake-up signals from the configured wake-up sources 13, 17, 19, 26.

In step 110, the microcontroller 9 receives a wake up signal, for example a CAN message, a pressed button, a message via a wireless network, a time-out, or a specific reached time. Then, the microcontroller 9 is switched from the stand-by mode to an activated mode according to an embodiment. Subsequently, the microcontroller activates the one or more first converters 7 in a specific sequence and/or time line and wakes up the at least one processor 3 or to switch in into the activated mode. In other embodiments, the microcontroller 9 sends, after reception of a wake-up signal a message via the modem to the remote server. Upon reception of a response message, or depending on the response message as described above, the microcontroller 9 activates the first converters as described here-above and/or switches the at least one processor 3 to the activated mode.

According to an embodiment, the at least one processor and the microcontroller are provided in distinct packaging.

According to an embodiment, it is possible to use the at least one powerful processor 3, hosting the complete application logic of the ECU 1, including bus handling, in particular CAN-handling, running a virtualization layer to achieve the best combination of safety and security regarding access to CAN and other security/safety relevant resources while offering high performance for applications running on the same processor, but still being able to fulfill the strong requirements regarding power consumption and monitoring a multiplicity of wakeup sources at the same time.

In particular, it is possible to provide a unified power management solution for software systems, consisting of multiple software components deployed on different partitions of a hypervisor based system.

Further it is possible to use a processor 3 which is not able to meet very strict power saving requirements in standby, as the ECU is has very low standby-power consumption due to the deactivation of the first converters 7.

## Claims

1. Control unit (1) comprising:
at least one processor (3) having an activated mode and a deactivated mode,
at least one memory (5) connected to the at least one processor, and
one or more wake-up sources (13, 17, 19, 26), wherein each wake-up source is connected to a microcontroller (9) to provide a wake-up signal to the microcontroller, the microcontroller (9) being connected to the at least one processor (3), wherein the microcontroller (9) is adapted to switch the at least one processor into the activated mode upon reception of at least one wake-up signal from a wake-up source monitored by the microcontroller, **characterized in that** the control unit (1) further comprises:
a virtualization layer (40) adapted to run on the at least one processor,
a first partition (32) provided by the virtualization layer,
a power management module (44) running in first partition,
at least one second partition (34, 36, 38) provided by the virtualization layer,
wherein in each second partition at least one application module (46) is adapted to run, wherein the power management module (44) is adapted to configure the microcontroller (9) in dependence of at least one state of the at least one application module (46).

2. Control unit according to claim 1, wherein the microcontroller (9) is adapted to switch the at least one processor (3) into the deactivated mode after reception of a respective command from the power management module.

3. Control unit according to claim 2, wherein the power management module (44) is adapted to determine a point in time to switch the at least one processor into the deactivated mode in dependence of at least one state of the at least one application module (46).

4. Control unit according to claims 2 or 3, further comprising one or more converters (7) for powering the at least one processor (3), wherein at least one converter has an activated mode and a deactivated mode, wherein the microcontroller (9) is adapted to switch the at least one converter (7) into the deactivated mode after reception of a respective command from the power management module (44) and/or, wherein the microcontroller (9) is adapted to switch the at least one converter (7) into the activated mode upon reception of at least one wake-up signal from a wake-up source monitored by the microcontroller.

5. Control unit according to one of the preceding claims, wherein the configuration of the microcontroller (9) determines the one or more wake-up sources to be monitored by the microcontroller.

6. Control unit according to one of the preceding claims, wherein the power management module (44) is adapted to provide for each application module (46) a respective state machine representing the actual state of each application module.

7. Control unit according to any one of the preceding claims, wherein the wake-up signal is a clock signal, a signal on a pin, a signal via a network connection, a signal received from a modem (13), a signal received from a hardware interface (17) of a bus and/or a signal via a bus.

8. Control unit according to one of the preceding claims, wherein the power consumption of the microcontroller (9), when in an activated state, is less than the power consumption of the at least one processor (3), when in the activated state, wherein, in particular the power consumption of the microcontroller, when in an activated state, is at least 10 times less than the power consumption of the at least one processor (3), when in the activated state.

9. Control unit according to one of the preceding claims, wherein the virtualization layer enables the first partition, in particular the power management module (44), exclusive access to the microcontroller.

10. Method for power control of a control unit (1), the control unit comprising a at least one processor (3) having an activated mode and a deactivated mode, at least one memory (5) connected to the at least one processor, and one or more wake-up sources (13, 17, 19, 26), wherein each wake-up source is connected to a microcontroller (9) to provide a wake-up signal to the microcontroller, the microcontroller being connected to the at least one processor (3), wherein the microcontroller is adapted switch the at least one processor into the activated state upon reception of at least one wake-up signal from a wake-up source monitored by the microcontroller, the method comprising:
running a virtualization layer (40) on the at least one processor,
providing a first partition on the virtualization layer (40), wherein the first partition includes a power management module (44),
providing at least one second partition on the virtualization layer, wherein each second partition includes at least one application module (46), sending, by the power management module (44), a wake-up configuration to the microcontroller in dependence of at least one state of the at least one application module.

11. Method according to claim 10, further comprising:
determining a point in time to switch the at least one processor (3) into the deactivated state in dependence of at least one state of the at least one application module (46);
sending a command to the microcontroller (9) in dependence of the determined point in time to switch the at least one processor (3) into the deactivated state and/or sending a command including the determined point in time.

12. Method according to claim 10 or 11, wherein the configuration of the microcontroller determines the one or more wake-up sources (13, 17, 19, 26) to be monitored by the microcontroller.

13. Method according to one of the preceding claims 10 to 12, further comprising:
running, in particular by the power management module, for each application module a respective state machine representing the actual state of each application module (46).

14. A computer program product is provided comprising commands for executing the method according one of the preceding claims 10 to 13, when loaded and executed on a processor.

15. A non-volatile memory, for example a hard disc, a solid state disc, a CD-ROM, a DVD, including a program containing commands for executing the method according one of the preceding claims 10 to 13, when loaded and executed on a processor.
